# EUROPEAN PATENT SPECIFICATION

(11) **EP 1 622 133 B1**
(45) Date of publication and mention of the grant of the patent: **24.09.2008**
(21) Application number: 05254767.6
(22) Date of filing: 29.07.2005
(51) Int. Cl.: G11B 7/007

(54) **Optical information recording medium**
Optisches Informationsaufzeichnungsmedium
Support d'enregistrement d'informations optiques

(30) Priority: 30.07.2004 JP 2004224806
(43) Date of publication of application: 01.02.2006
(73) Proprietor: TAIYO YUDEN CO., LTD., Tokyo 110-0005 (JP)
(72) Inventor: Shimizu, Hironobu, Tokyo 110-0005 (JP); Morishita, Daisuke, Tokyo 110-0005 (JP)
(74) Representative: Jackson, Richard Eric

(56) References cited:
- EP-A1- 1 152 402
- EP-A2- 1 302 937
- WO-A2-03/069609
- US-A1- 2002 003 770

## Description

### BACKGROUND OF THE INVENTION

### 1. Field of the Invention

The present invention relates to an optical information recording medium, and in particular to an optical information recording medium for performing recording by a laser beam (blue laser) with a wavelength of 350 to 500 nm.

### 2. Description of the Related Art

Conventionally, in addition to an optical information recording medium for performing recording and reproduction of optical information using a laser beam (an example of which is given in WO 03/069609), that is, a CD using red laser light with a wavelength of 750 to 830 nm (e.g., around 780 nm) or a DVD using short wavelength red laser light with a wavelength of 640 to 680 nm (e.g., 650 to 665 nm), a blue laser disc (BD or HD-DVD), which can make it possible to record and reproduce high-density optical information at high speed by using a blue laser with a wavelength as short as 350 to 500 nm (e.g., around 405 nm), has been actively developed (see, for example, JP-A-2003-331465).

In standards concerning the blue laser disc (BD or HD-DVD), it is provided that sub-information of a type different from main information for performing conventional data logging is recorded (BCA recording, pit row recording).

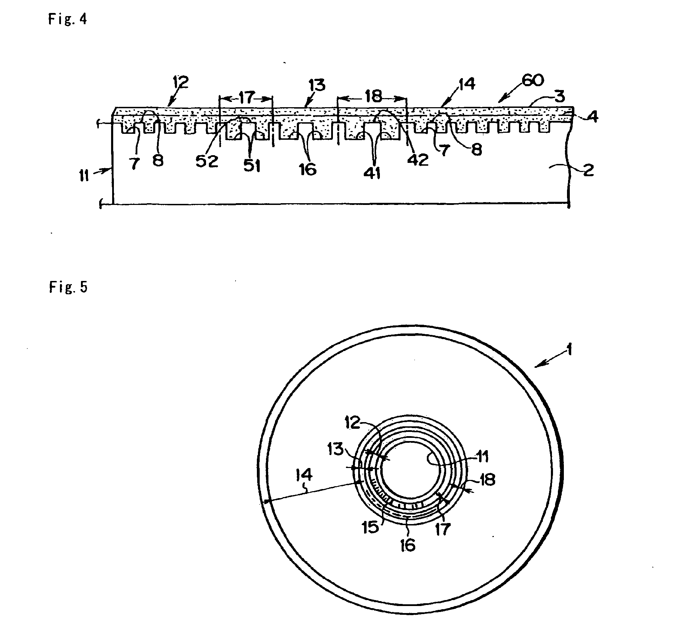

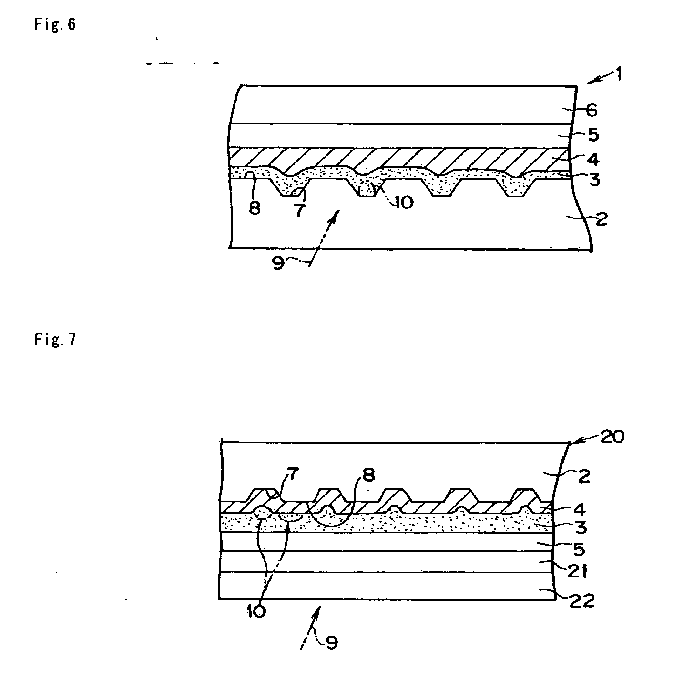

Fig. 5 is a schematic plan view of an optical information recording medium 1 using the blue laser disc (in particular, HD-DVD). Fig. 6 is a schematic sectional view thereof.

The optical information recording medium 1 includes, in particular, as shown in Fig. 6, a translucent substrate 2, an optical recording layer 3 (a light-absorbing layer) formed on the substrate 2, a light reflection layer 4 formed on the optical recording layer 3, a protective layer 5 (an adhesive layer) formed on the light reflection layer 4, and a dummy substrate 6 stacked on an upper layer on the protective layer 5 at a predetermined thickness. The optical information recording medium 1 is formed at a predetermined thickness required by standards.

Spiral pre-grooves 7 are formed in the substrate 2. Portions other than the pre-grooves 7, that is, lands 8 are located on the left and the right of the pre-groove 7.

A laser beam 9 is irradiated from the substrate 2 side, whereby the optical recording layer 3 absorbs energy of the laser beam 9 to generate heat. Recording pits 10 are formed by thermal decomposition of the optical recording layer 3 to make it possible to record information in the optical recording layer 3.

As the translucent substrate 2, a material with high transparency with a refractive index with respect to the laser beam 9 in a range of, for example, about 1.5 to 1.7, having thickness of about 1.1 mm, and excellent in impact resistance, which is formed mainly of resin, for example, polycarbonate, a glass plate, an acrylic plate, or an epoxy plate is used.

The optical recording layer 3 is a layer consisting of a light-absorbing material (photoabsorption material) comprising dyes formed on the substrate 2. When the laser beam 9 is irradiated, heat generation, melting, sublimation, deformation, or modification is caused in the optical recording layer 3. The optical recording layer 3 is formed by uniformly coating a dye or the like dissolved by a solvent over the surface of the substrate 2 with means such as spin coating.

An arbitrary optical recording material can be adopted as a material used for the optical recording layer 3. However, the material is desirably a light-absorbing organic dye and is required to have a refractive index n exceeding 1.9 in an absorption wavelength area of the laser beam 9.

The light reflection layer 4 is a metal film with high thermal conductivity and light reflectivity. The light reflection layer 4 is formed from gold, silver, copper, aluminum, or an alloy containing these metals by means such as evaporation or sputtering.

The protective layer 5 is formed from resin excellent in impact resistance and adhesiveness, which is the same as the material used for the substrate 2. For example, the protective layer is formed by applying ultraviolet curing resin on the light reflection layer 4 with spin coating and irradiating ultraviolet rays to harden the ultraviolet curing resin.

The dummy substrate 6 is formed of the same material as the substrate 2.

As shown in, in particular, Fig. 5, a first sub-information area 12 (a BCA recording area), a second sub-information area 13 (a system read-in area), and a main information area 14 (a data area) can be defined two-dimensionally and concentrically from a center hole 11 of the optical information recording medium 1 (the substrate 2) toward an outer peripheral side.

The first sub-information area 12 is provided in an outer peripheral side circumferential part of the center hole 11 at a predetermined interval from the center of the optical information recording medium 1. Burst Cutting Area (BCA) recording in a barcode shape is applied to the first sub-information area 12. The second sub-information area 13 is provided at a predetermined interval from the first sub-information area 12. Information by embossed pits is recorded in the second sub-information area 13.

The BCA recording forms a recording area (the first sub-information area 12) formed of barcodes 15 near the center of the disc (the optical information recording medium 1), and records key information and the like in the barcodes 15 of a type different from main information (BCA recording) using the laser beam 9 to make it possible to, for example, represent a serial number of the disk and prevent illegal copy of the disk. Sub-information is not limited to information according to the BCA recording. A sub-information area is not limited to the BCA recording area.

Note that a section of the first sub-information area 12 and the main information area 14 has a structure shown in Fig. 6 and makes the barcodes 15 recordable according to absorption of the laser beam 9 by the optical recording layer 3 in the first sub-information area 12.

The second sub-information area 13 is located at a predetermined interval on an outer peripheral side of the first sub-information area 12. The second sub-information area 13 performs recording of second sub-information with pits 16 formed by embossing (pit record).

Information recorded in the second sub-information area 13 includes information such as a type and a structure of the disk and a manufacturer.

The main information area 14 is an area that is located further on the outer peripheral side of the second sub-information area 13 at a predetermined interval and used for recording and reproduction of usual optical information by the laser beam 9 used by general users. The main information is not limited to information recorded in the main information area 14 (the data area), that is, this data information recorded by the general users.

Note that a first boundary area 17 having a predetermined interval is demarcated between the first sub-information area 12 and the second sub-information area 13.

A second boundary area 18 having a predetermined interval is demarcated between the second sub-information area 13 and the main information area 14.

However, the standards do not indicate conditions for a specific structure concerning the first boundary area 17 and the second boundary area 18.

At a stage of shipment from a factory, in the optical information recording medium 1, information is written in both the first sub-information area 12 and the second sub-information area 13 by a writing device for BCA and an embossing device (not shown). There is a problem in that it is necessary to perform the BCA recording, in particular, in the first sub-information area 12 according to barcode recording after forming the optical recording layer 3, the light reflection layer 4, the protective layer 5, and the dummy substrate 6 on the substrate 2 independently from a stamping process for forming the pre-grooves 7 and the lands 8 in the substrate 2.

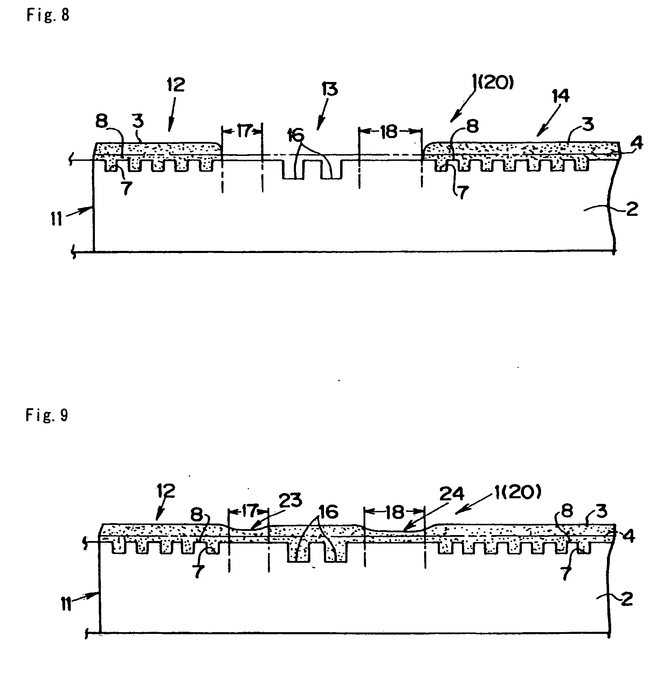

In the second sub-information area 13, pit information by the pit rows is recorded by embossing simultaneously in the stamping process at the time of molding of the substrate 2. However, there is a problem of how to process the first boundary area 17 and the second boundary area 18 in relation to the first sub-information area 12 and the main information area 14 (as described later on the basis of Figs. 8 and 9).

These problems are common to blue laser discs (BDs) of other types.

Fig. 7 is a schematic sectional view of an optical information recording medium 20 using the blue laser disc (in particular, BD).

As shown in the figure, the optical information recording medium 20 includes the transparent 2, the light reflection layer 4, the optical recording layer 3, the protective layer 5, an adhesive layer 21, and a cover layer 22. A plan view thereof is substantially identical with that of the optical information recording medium 1 (Fig. 5). Note that an inorganic layer may be added on the surface of the protective layer 5 or the adhesive layer 21.

The adhesive layer 21 sticks the cover layer 22 with thickness of about 0.1 mm to the protective layer 5.

When the laser beam 9 is irradiated from the cover layer 22 side, the optical recording layer 3 absorbs energy of the laser beam 9 to generate heat. Recording pits 10 is formed in the pre-grooves 7 or the lands 8 according to thermal decomposition of the optical recording layer 3 to make it possible to record information in the optical recording layer 3.

Fig. 8 is an expanded sectional view of the parts of the first boundary area 17 and the second boundary area 18. For convenience of explanation, relative sizes and shapes thereof are neglected.

As shown in the figure, it is essentially unnecessary to form the optical recording layer 3 in the first boundary area 17 and the second boundary area 18. It is also unnecessary to apply a dye thereto.

A pigment film such as the optical recording layer 3 is not formed on the first sub-information area 12. Although it is possible to form the barcodes 15 by embossing, it is unrealistic to prepare stampers for the respective optical information recording media 1 (the optical information recording media 20). Actually, a pigment film is formed as in the second sub-information area 13.

Therefore, from the viewpoint of a manufacturing process of the optical information recording medium 1 or the optical information recording medium 20, it is not preferable not to apply a dye only to the parts of the first boundary areas 17, the second sub-information area 13, and the second boundary area 18 because extra processing is required.

In other words, from the viewpoint of the manufacturing process, it is desirable to apply a dye uniformly from the first sub-information area 12 to the first boundary area 17, the second sub-information area 13, the second boundary area 18, and the main information area 14.

Fig. 9 is an expanded sectional view of the parts of the first boundary area 17 and the second boundary area 18 to which a dye is applied. The parts of the first boundary area 17 and the second boundary area 18 are mirror surfaces. Therefore, in an application process of a dye solution, which is formed by dissolving a dye in an organic solvent, by spin coating, it is likely that an application property of the dye solution in these parts lacks uniformity and a first recess 23 and a second recess 24 are formed in the dye in the first boundary area 17 and the dye in the second boundary area 18 respectively, to deteriorate a film formation property and cause a problem in an optical property of the optical information recording medium 1 or the optical information recording medium 20.

Document WO 03/069609 discloses the features of the preamble of claim 1.

### SUMMARY OF THE INVENTION

The invention has been devised in view of the problems and it is an object of the invention to provide an optical information recording medium that can set a film formation property of a pigment layer (an optical recording layer) thereof at a predetermined level.

It is another object of the invention to provide an optical information recording medium that is capable of improving an application property for applying a dye solution to a substrate.

It is still another object of the invention to provide an optical information recording medium that can obtain an optimum optical property.

It is still another object of the invention to provide an optical information recording medium with satisfactory productivity while securing characteristics of a first sub-information area (a BCA recording area), a second sub-information area (a system read-in area), and a main information area (a data area).

It is still another object of the invention to provide an optical information recording medium that makes it easy to secure a groove characteristic in a first sub-information area and a main information area and an embossing characteristic in a second sub-information area.

The invention aims at securing a film formation property stably by forming grooves of a predetermined shape in a first boundary area between a first sub-information area and a second sub-information area and a second boundary area between the second sub-information area and a main information area, respectively.

This invention provides an optical information recording medium, comprising a substrate having translucency; an optical recording layer; and a light reflection layer reflecting the laser beam, the optical information recording medium having a main information area for recording main information that is optically readable by irradiating the laser beam on the optical recording layer, wherein
a first sub-information area, a second sub-information area, and the main information area are provided in order from the center of the optical information recording medium in an outer peripheral direction,
first sub-information is made recordable in the first sub-information area by the laser beam, second sub-information is made recordable in the second sub-information area by the laser beam, at least one first groove is formed in a first boundary area between the first sub-information area and the second sub-information area, and at least one second groove is formed in a second boundary area between the second sub-information area and the main information area; characterised in that: the optical recording layer comprises a light-absorbing material formed of a dye that absorbs a laser beam; each of the at least one first grooves has a first pitch; and each of the at least one second grooves (32) has a second pitch.

Consequently, it is possible to improve uniformity of an optical recording layer (an application property for applying a dye to the optical recording layer) with the grooves formed among the regions.

The first sub-information can be recorded by barcodes of a type different from a type of the main information. In this system, uniformity can be maintained regardless of a recording shape. Thus, barcode recording can be performed in more various forms to make it possible to perform recording of information other than pit recording used in copy control or the like.

The second sub-information can be recorded by embossed pits In this system, a characteristic improving effect due to uniformity is obtained even for an embossed shape, it is possible to expand use of the optical information recording medium to a ROM, R-mixed Disc, and the like.

The first and the second grooves can have the same depths. This makes it possible to facilitate manufacturing of a stamper and transfer at the time of formation of a substrate.

The first and the second grooves can have the same pitches. This makes it possible to facilitate manufacturing of a stamper and transfer at the time of formation of a substrate.

The first and the second grooves can have different pitches. Consequently, a reading system can be complicated to cope with an application such as copy protection suitably. In addition, it is possible to use the optical information recording medium for malfunction prevention when the optical information recording medium is inserted in players or recorders with different standards.

The first and the second grooves can have the same widths. This makes it possible to facilitate manufacturing of a stamper and transfer at the time of formation of a substrate.

The first and the second grooves can have different widths. Consequently, a reading system can be complicated to cope with an application such as copy protection suitably. In addition, it is possible to use the optical information recording medium for malfunction prevention when the optical information recording medium is inserted in players or recorders with different standards.

The first and the second grooves can be formed in a spiral shape or a concentric shape. When the first and the second grooves are formed in a spiral shape, it is easy to manufacture a stamper. When the first and the second grooves are formed in a concentric shape, a reading system can be complicated to cope with an application such as copy protection suitably.

Depth of the first groove can be the same as depth of pre-grooves of the first sub-information area or depth of pits of the second sub-information area. This makes it possible to facilitate manufacturing of a stamper and transfer at the time of formation of a substrate.

Width of the first groove can be the same as width of the pre-grooves of the first sub-information area or width of the pits of the second sub-information area. This makes it possible to facilitate manufacturing of a stamper and transfer at the time of formation of a substrate.

Depth of the second groove can be the same as depth of the pits of the second sub-information area or depth of pre-grooves of the main information area. This makes it possible to facilitate manufacturing of a stamper and transfer at the time of formation of a substrate.

Width of the second groove can be the same as width of the pits of the second sub-information area or depth of the pre-grooves of the main information area.

Note that the depth, the width, and the pitch referred to in the invention can be adjusted appropriately according to types or the like of the laser and the optical information recording medium to be used. In terms of a wavelength λ of the laser, as standards, the depth can be usually adjusted to λ3 to λ/8, the pitch can be adjusted to 1.55 to 1.65, preferably, 1.58 to 1.62 for 750 nm to 800 nm (CD recording), 0.60 to 0.80, preferably, 0.72 to 0.76 for 600 nm to 700 nm (DVD recording, 660 nm), and 0.30 to 0.50 for 350 nm to 410 nm (blue laser, 405 nm), and the width can be adjusted to 30% to 70%, preferably 40% to 60% with respect to the pitch. When the depth, the width, and the pitch depart from these ranges, the operational effects of the invention cannot be shown sufficiently in some cases.

### BRIEF DESCRIPTION OF THE DRAWINGS

In the accompanying drawings:
Fig. 1 is an expanded sectional view of an optical information recording medium 30 according to a first embodiment of the invention;
Fig. 2 is an expanded sectional view of a main part of an optical information recording medium 40 according to a second embodiment of the invention;
Fig. 3 is an expanded sectional view of a main part of an optical information recording medium 50 according to a third embodiment of the invention;
Fig. 4 is an expanded sectional view of a main part of an optical information recording medium 60 according to a fourth embodiment of the invention;
Fig. 5 is a schematic plan view of an optical information recording medium 1 using a blue laser disc (HD-DVD);
Fig. 6 is a schematic sectional view of the optical information recording medium 1 using a blue laser disc (HD-DVD);
Fig. 7 is a schematic sectional view of an optical information recording medium 20 using a blue laser disc (BD);
Fig. 8 is an expanded sectional view of the parts of a first boundary area 17 and a second boundary area 18 of the optical information recording medium 20; and
Fig. 9 is an expanded sectional view of the parts of the first boundary area 17 and the second boundary area 18 in a state in which a dye is applied thereto.

### DESCRIPTION OF THE EMBODIMENTS

In the invention, since grooves are formed in predetermined interval portions of plural information areas, an optical information recording medium excellent in an optical property and productivity can be realized.

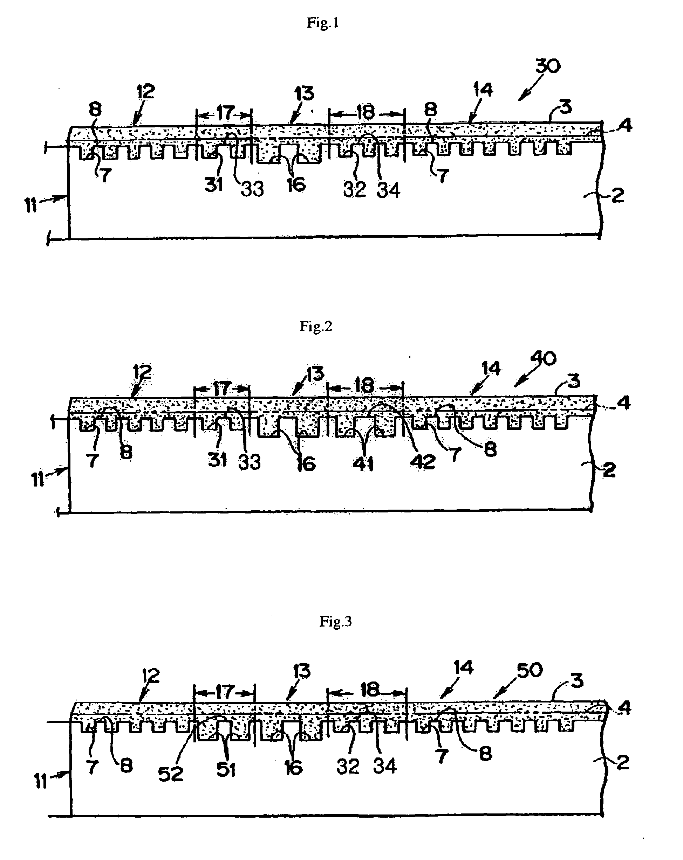

An optical information recording medium 30 according to a first embodiment of the invention will be explained with reference to Fig. 1. Note that portions same as those in Figs. 5 to 9 are denoted by the identical reference numerals and signs, and detailed descriptions of the portions are omitted.

Fig. 1 is an expanded sectional view of a main part of the optical information recording medium 30. On the substrate 2 of the optical information recording medium 30, the pre-grooves 7 and the lands 8 are formed in the first sub-information area 12, the pits 16 are formed in the second sub-information area 13, and the pre-grooves 7 and the lands 8 are formed in the main information area 14. In addition, first grooves 31 are formed in the first boundary area 17 and second grooves 32 are formed in the second boundary area 18.

First lands 33 equivalent to the lands 8 are formed among the first grooves 31 and second lands 34 equivalent to the lands 8 are formed among the second grooves 32.

Note that the pits 16 in the second sub-information area 13 are relatively large compared with the pre-grooves 7 in the first sub-information area 12 and the main information area 14 and are drawn relatively large.

The first grooves 31 and the second grooves 32 have the same depth, the same pitch, and the same width, respectively. The depth, the pitch, and the width are the same as those of the pre-grooves 7 in the first sub-information area 12 and the main information area 14.

Moreover, the first grooves 31 and the second grooves 32 can be formed in a spiral shape or a concentric shape.

In the optical information recording medium 30 with such a constitution, regardless of whether the optical information recording medium 30 is a type of the optical information recording medium 1 in which the optical recording layer 3 is formed directly on the substrate 2 (Fig. 6) or a type of the optical information recording medium 20 in which the optical recording layer 3 is formed via the light reflection layer 4 (Fig. 7), a constitution or a shape of surfaces of the first boundary area 17 and the second boundary area 18 is identical with that of the first sub-information area 12 and the main information area 14. Thus, it is possible to uniformalize an application condition of a dye solution in spin coating for forming the optical recording layer 3 to prevent the first recess 23 or the second recess 24 (Fig. 9) from being formed.

Note that the first grooves 31 and the second grooves 32 do not always have to have the same pitch or the same width. The first grooves 31 and the second grooves 32 may have pitches or widths different from each other by an arbitrary degree as required.

As optical properties of the first sub-information area 12, the second sub-information area 13, and the main information area 14, depths, pitches, and widths as well as other shapes thereof are adjusted according to an amount, a type, or the like of a dye in the optical recording layer 3.

Depths, pitches, and widths as well as other shapes of the first grooves 31 and the second grooves 32 can be adjusted, respectively, according to a relative positional relation among the first sub-information area 12, the second sub-information area 13, and the main information area 14.

Fig. 2 is an expanded sectional view of a main part of an optical information recording medium 40 according to a second embodiment of the invention. On the substrate 2 of the optical information recording medium 40, the pre-grooves 7 and the lands 8 are formed in the first sub-information area 12, the pits 16 are formed in the second sub-information area 13, and the pre-grooves 7 and the lands 8 are formed in the main information area 14. In addition, the first grooves 31 and the first lands 33 same as those described above are formed in the first boundary area 17 and second grooves 41 are formed in the second boundary area 18.

Second lands 42 are formed among the second grooves 41.

The second grooves 41 have the same depth, the same pitch, and the same width as the pits 16 in the second sub-information area 13. A dye solution applied on the second grooves 41 can have an application property equivalent to that of the dye solution in the second sub-information area 13.

In the optical information recording medium 40 with such a constitution, again, a constitution or a shape of a surface of the first boundary area 17 is identical with those of the first sub-information area 12 and the main information area 14. A constitution or a shape of a surface of the second boundary area 18 is identical with that of the sub-information area 13. Thus, it is possible to uniformalize an application condition of a dye solution in spin coating for forming the optical recording layer 3 as much as possible to prevent the first recess 23 or the second recess 24 from being formed.

Fig. 3 is an expanded sectional view of an optical information recording medium 50 according to a third embodiment of the invention. On the substrate 2 of the optical information recording medium 50, the pre-grooves 7 and the lands 8 are formed in the first sub-information area 12, the pits 16 are formed in the second sub-information area 13, and the pre-grooves 7 and the lands 8 are formed in the main information area 14. In addition, the first grooves 32 and the first lands 34 same as those described above are formed in the second boundary area 18. Second grooves 51 and second lands 52 are formed in the first boundary area 17.

The second grooves 51 have the same depth, the same pitch, and the same width as the pits 16 in the second sub-information area 13. A dye solution applied on the second grooves 51 can have an application property equivalent to that of the dye solution in the second sub-information area 13.

In the optical information recording medium 50 with such a constitution, again, a constitution or a shape of a surface of the first boundary area 17 is identical with that of the second sub-information area 13. A constitution or a shape of a surface of the second boundary area 18 is identical with those of the first sub-information area 12 and the main information area 14. Thus, it is possible to uniformalize an application condition of a dye solution in spin coating for forming the optical recording layer 3 as much as possible to prevent the first recess 23 or the second recess 24 from being formed.

Fig. 4 is an expanded sectional view of a main part of an optical information recording medium 60 according to a fourth embodiment of the invention. On the substrate 2 of the optical information recording medium 60, the pre-grooves 7 and the lands 8 are formed in the first sub-information area 12, the pits 16 are formed in the second sub-information area 13, and the pre-grooves 7 and the lands 8 are formed in the main information area 14. In addition, the second grooves 51 and the second lands 52 are formed in the first boundary area 17 and the second grooves 41 and the second lands 42 are formed in the second boundary area 18.

In the optical information recording medium 60 with such a constitution, again, a constitution or a shape of surfaces of the first boundary area 17 and the second boundary area 18 is identical with that of the second sub-information area 13. Thus, it is possible to uniformalize an application condition of a dye solution in spin coating for forming the optical recording layer 3 as much as possible to prevent the first recess 23 or the second recess 24 from being formed.

In the optical information recording medium according to the invention, the optical information recording medium has the plural divided information areas, these information areas are formed at predetermined intervals, and the grooves are formed in the intervals. Specifically, the grooves of a predetermined shape are formed in the first boundary area between the first sub-information area and the second sub-information area and the second boundary area between the second sub-information area and the main information area. Thus, in applying a dye to these regions to form an optical recording layer, behaviors of the dye in the first boundary area and the second boundary area is set the same as those in the first sub-information area, the second sub-information area, and the main information area to make it possible to form a uniform and stable pigment film. Therefore, it is possible to secure stable characteristics in the respective regions and improve productively.

## Claims

1. An optical information recording medium (30), comprising:
a substrate (2) having translucency;
an optical recording layer (3); and
a light reflection layer (4) reflecting the laser beam,
the optical information recording medium (30) having a main information area (14) for recording main information that is optically readable by irradiating the laser beam on the optical recording layer (3), wherein
a first sub-information area (12), a second sub-information area (13), and the main information area (14) are provided in order from the center of the optical information recording medium (30) in an outer peripheral direction,
first sub-information is made recordable in the first sub-information area (12) by the laser beam,
second sub-information is made recordable in the second sub-information area (13) by the laser beam,
at least one first groove (31) is formed in a first boundary area (17) between the first sub-information area (12) and the second sub-information area (13), and
at least one second groove (32) is formed in a second boundary (18) area between the second sub-information area (13) and the main information area (14); **characterised in that:**
the optical recording layer comprises a light-absorbing material formed of a dye that absorbs a laser beam;
each of the at least one first grooves (31) has a first pitch; and
each of the at least one second grooves (32) has a second pitch.

2. The optical information recording medium (30) according to claim 1, wherein the first sub-information is recorded or embossed by barcodes of a type different from a type of the main information.

3. The optical information recording medium (30) according to claim 1, wherein the second sub-information area (13) is embossed with pits (16).

4. The optical information recording medium (30) according to claim 1, wherein the at least one first groove (31) and the at least one second groove (32) have the same depth.

5. The optical information recording medium (30) according to claim 1, wherein the at least one first groove (31) and the at least one second groove (32) have the same pitch.

6. The optical information recording medium (30) according to claim 1, wherein the at least one first groove (31) and the at least one second groove (32) have different pitches, mutually.

7. The optical information recording medium (30) according to claim 1, wherein the at least one first groove (31) and the at least one second groove (32) have the same width.

8. The optical information recording medium (30) according to claim 1, wherein the at least one first groove (31) and the at least one second groove (32) have different widths, mutually.

9. The optical information recording medium (30) according to claim 1, wherein the at least one first groove (31) and the at least one second groove (32) are formed in a spiral shape or a concentric shape.

10. The optical information recording medium (30) according to claim 1, wherein the depth of the at least one first groove (31) is the same as the depth of the pre-grooves (7) of the first sub-information area (12) and/or the depth of the pits (16) of the second sub-information area (13).

11. The optical information recording medium (30) according to claim 1, wherein the width of the at least one first groove (31) is the same as the width of the pre-grooves (7) of the first sub-information area (12) and/or the width of the pits (16) of the second sub-information area (13).

12. The optical information recording medium (30) according to claim 1, wherein the depth of the at least one second groove (32) is the same as the depth of the pits (16) of the second sub-information area (13) or the depth of pre-grooves (7) of the main information area (14).

13. The optical information recording medium (30) according to claim 1, wherein the width of the at least one second groove (32) is the same as the width of the pits (16) of the second sub-information area (13) or the width of the pre-grooves (7) of the main information area (14).

## Patentansprüche

1. Optisches Informationsaufzeichnungsmedium (30), umfassend:
ein Substrat (2), das Lichtdurchlässigkeit aufweist;
eine optische Aufzeichnungsschicht (3); und
eine Lichtreflexionsschicht (4), die den Laserstrahl reflektiert,
wobei das optische Informationsaufzeichnungsmedium (30) aufweist: einen Hauptinformationsbereich (14) zum Aufzeichnen von Hauptinformationen, die optisch lesbar sind, indem der Laserstrahl auf die optische Aufzeichnungsschicht (3) ausgestrahlt wird, wobei
ein erster Sub- bzw. Teilinformationsbereich (12), ein zweiter Sub- bzw. Teilinformationsbereich (13) und der Hauptinformationsbereich (14) in der Reihenfolge von dem Mittelpunkt des optischen Informationsaufzeichnungsmediums (30) in einer Außenumfangsrichtung vorgesehen sind,
die erste Sub- bzw. Teilinformation in dem ersten Teilinformationsbereich (12) durch den Laserstrahl aufzeichenbar gemacht ist,
die zweite Sub- bzw. Teilinformation in dem zweiten Teilinformationsbereich (13) durch den Laserstrahl aufzeichenbar gemacht ist,
wenigstens eine erste Rille bzw. Nut (31) in einem ersten Grenzbereich (17) zwischen dem ersten Teilinformationsbereich (12) und dem zweiten Teilinformationsbereich (13) gebildet ist, und
wenigstens eine zweite Rille bzw. Nut (32) in einem zweiten Grenzbereich (18) zwischen dem zweiten Teilinformationsbereich (13) und dem Hauptinformationsbereich (14) gebildet ist, **dadurch gekennzeichnet, dass**:
die optische Aufzeichnungsschicht ein lichtabsorbierendes Material umfasst, das aus einem Farbstoff gebildet ist, der einen Laserstrahl absorbiert,
jede der wenigstens einen ersten Rillen (31) einen ersten Abstand aufweist und
jede der wenigstens einen zweiten Rillen (32) einen zweiten Abstand aufweist.

2. Optisches Informationsaufzeichnungsmedium (30) nach Anspruch 1, wobei die ersten Teilinformationen durch Strichcodes einer Art unterschiedlich von einer Art der Hauptinformationen aufgezeichnet oder geprägt werden.

3. Optisches Informationsaufzeichnungsmedium (30) nach Anspruch 1, wobei der zweite Teilinformationsbereich (13) mit Vertiefungen bzw. Pits (16) geprägt ist.

4. Optisches Informationsaufzeichnungsmedium (30) nach Anspruch 1, wobei die wenigstens eine erste Rille (31) und die wenigstens eine zweite Rille (32) die gleiche Tiefe aufweisen.

5. Optisches Informationsaufzeichnungsmedium (30) nach Anspruch 1, wobei die wenigstens eine erste Rille (31) und die wenigstens eine zweite Rille (32) den gleichen Abstand aufweisen.

6. Optisches Informationsaufzeichnungsmedium (30) nach Anspruch 1, wobei die wenigstens eine erste Rille (31) und die wenigstens eine zweite Rille (32) zueinander unterschiedliche Abstände aufweisen.

7. Optisches Informationsaufzeichnungsmedium (30) nach Anspruch 1, wobei die wenigstens eine erste Rille (31) und die wenigstens eine zweite Rille (32) die gleiche Breite aufweisen.

8. Optisches Informationsaufzeichnungsmedium (30) nach Anspruch 1, wobei die wenigstens eine erste Rille (31) und die wenigstens eine zweite Rille (32) zueinander unterschiedliche Breiten aufweisen.

9. Optisches Informationsaufzeichnungsmedium (30) nach Anspruch 1, wobei die wenigstens eine erste Rille (31) und die wenigstens eine zweite Rille (32) in Spiralform oder konzentrischer Form gebildet sind.

10. Optisches Informationsaufzeichnungsmedium (30) nach Anspruch 1, wobei die Tiefe der wenigstens einen ersten Rille (31) die gleiche ist wie die Tiefe der Führungsrillen bzw. Pre-Grooves (7) des ersten Teilinformationsbereichs (12) und/oder die Tiefe der Pits (16) des zweiten Teilinformationsbereichs (13).

11. Optisches Informationsaufzeichnungsmedium (30) nach Anspruch 1, wobei die Breite der wenigstens einen ersten Rille (31) die gleiche ist wie die Breite der Pre-Grooves (7) des ersten Teilinformationsbereichs (12) und/oder die Breite der Pits (16) des zweiten Teilinformationsbereichs (13).

12. Optisches Informationsaufzeichnungsmedium (30) nach Anspruch 1, wobei die Tiefe der wenigstens einen zweiten Rille (32) die gleiche ist wie die Tiefe der Pits (16) des zweiten Teilinformationsbereichs (13) oder die Tiefe der Pre-Grooves (7) des Hauptinformationsbereichs (14)

13. Optisches Informationsaufzeichnungsmedium (30) nach Anspruch 1, wobei die Breite der wenigstens einen zweiten Rille (32) die gleiche ist wie die Breite der Pits (16) des zweiten Teilinformationsbereichs (13) oder die Breite der Pre-Grooves (7) des Hauptinformationsbereichs (14).

## Revendications

1. Support d'enregistrement d'informations optiques (30) comprenant :
un substrat (2) à translucidité ;
une couche d'enregistrement optique (3) ; et
une couche de réflexion lumineuse (4) réfléchissant le rayon laser,
le support d'enregistrement d'informations optiques (30) comportant une zone d'informations principales (14) destinée à enregistrer des informations principales qui sont lisibles optiquement par irradiation du faisceau laser sur la couche d'enregistrement optique (3), dans lequel
une première zone d'informations secondaires (12), une seconde zone d'informations secondaires (13) et la zone d'informations principales (14) sont prévues dans l'ordre à partir du centre du support d'enregistrement d'informations optiques (30) dans une direction périphérique extérieure,
les premières informations secondaires sont enregistrables par faisceau laser dans la première zone d'informations secondaires (12),
les secondes informations secondaires sont enregistrables par faisceau laser dans la seconde zone d'informations secondaires (13),
au moins une première rainure (31) est formée dans une première zone d'interface (17) entre la première zone d'informations secondaires (12) et la seconde zone d'informations secondaires (13), et
au moins une seconde rainure (32) est formée dans une seconde zone d'interface (18) entre la seconde zone d'informations secondaires (13) et la zone d'informations principales (14) ; **caractérisé en ce que :**
la couche d'enregistrement optique comprend une matière photo-absorbante formée d'un colorant qui absorbe un faisceau laser ;
chacune des au moins une premières rainures (31) présente un premier pas ; et
chacune des au moins une secondes rainures (32) présente un second pas.

2. Support d'enregistrement d'informations optiques (30) selon la revendication 1, dans lequel les premières informations secondaires sont enregistrées ou gravées par des codes à barres d'un type différent d'un type des informations principales.

3. Support d'enregistrement d'informations optiques (30) selon la revendication 1, dans lequel la seconde zone des informations secondaires (13) est gravée sous forme de micro-cuvettes (16).

4. Support d'enregistrement d'informations optiques (30) selon la revendication 1, dans lequel la au moins une première rainure (31) et la au moins une seconde rainure (32) ont la même profondeur.

5. Support d'enregistrement d'informations optiques (30) selon la revendication 1, dans lequel la au moins une première rainure (31) et la au moins une seconde rainure (32) ont le même pas.

6. Support d'enregistrement d'informations optiques (30) selon la revendication 1, dans lequel la au moins une première rainure (31) et la au moins une seconde rainure (32) ont des pas mutuellement différents.

7. Support d'enregistrement d'informations optiques (30) selon la revendication 1, dans lequel la au moins une première rainure (31) et la au moins une seconde rainure (32) ont la même largeur.

8. Support d'enregistrement d'informations optiques (30) selon la revendication 1, dans lequel la au moins une première rainure (31) et la au moins une seconde rainure (32) ont des largeurs mutuellement différentes.

9. Support d'enregistrement d'informations optiques (30) selon la revendication 1, dans lequel la au moins une première rainure (31) et la au moins une seconde rainure (32) sont réalisées en forme de spirale ou ont une forme concentrique.

10. Support d'enregistrement d'informations optiques (30) selon la revendication 1, dans lequel la profondeur de la au moins une première rainure (31) est la même que la profondeur des pré-sillons (7) de la première zone d'informations secondaires (12) et/ou la profondeur des micro-cuvettes (16) de la seconde zone d'informations secondaires (13).

11. Support d'enregistrement d'informations optiques (30) selon la revendication 1, dans lequel la largeur de la au moins une première rainure (31) est la même que la largeur des pré-sillons (7) de la première zone d'informations secondaires (12) et/ou la largeur des micro-cuvettes (16) de la seconde zone d'informations secondaires (13).

12. Support d'enregistrement d'informations optiques (30) selon la revendication 1, dans lequel la profondeur de la au moins une seconde rainure (32) est la même que la profondeur des micro-cuvettes (16) de la seconde zone d'informations secondaires (13) et/ou la profondeur des pré-sillons (7) de la zone d'informations principales (14).

13. Support d'enregistrement d'informations optiques (30) selon la revendication 1, dans lequel la largeur de la au moins une seconde rainure (32) est la même que la largeur des micro-cuvettes (16) de la seconde zone d'informations secondaires (13) et/ou la largeur des pré-sillons (7) de la zone d'informations principales (14).
